# EUROPÄISCHE PATENTSCHRIFT

(11) **EP 0 426 895 B1**
(45) Veröffentlichungstag und Bekanntmachung des Hinweises auf die Patenterteilung: **18.08.1993**
(21) Anmeldenummer: 89120723.5
(22) Anmeldetag: 08.11.1989
(51) Int. Cl.: F16B 39/24, F16B 39/282

(54) **Selbstsichernde Befestigungseinrichtung**
Self locking fastening device
Dispositif de fixation autoblocante

(43) Veröffentlichungstag der Anmeldung: 15.05.1991
(73) Patentinhaber: BAUER & SCHAURTE KARCHER GMBH, D-41462 Neuss (DE)
(72) Erfinder: Blume, Dietrich, Dipl.-Ing., 7613 Hausach (DE); Esser, Josef, Dipl.-Ing., 4040 Neuss (DE); Grossmann, Friedrich, Wilhelm, Dipl.-Ing., 4040 Neuss 22 - Holzheim (DE); Peukes, Norbert, Dipl.-Ing., 4150 Krefeld-Verberg (DE); Schmittmann, Franz, Ludwig, 4052 Korschenbroich 3 (DE)
(74) Vertreter: Dr. Elisabeth Jung Dr. Jürgen Schirdewahn Dipl.-Ing. Claus Gernhardt

(56) Entgegenhaltungen:
- BE-A- 571 134
- DE-A- 2 556 985
- DE-A- 2 811 108
- DE-A- 3 242 545
- FR-A- 993 510

## Beschreibung

Die Erfindung betrifft eine selbstsichernde Befestigungseinrichtung, mit einer Schraube oder Mutter zum Befestigen wenigstens eines ersten Bauteiles an einem anderen Bauteil, wobei die Sicherungswirkung an miteinander in Eingriff tretenden Flächen mittels Rippen erhalten wird, die derart abgerundet sind, daß ein Glattwalzeffekt erzielt wird.

In der DE-C-25 56 985 ist ein selbstsicherndes Befestigungselement wie z.B. eine Schraube oder Mutter offenbart, dessen mit einem Bauteil zusammenwirkende Stirnfläche eine Anzahl von Rippen aufweist, die derart abgerundet sind, daß beim Drehen des Befestigungselementes relativ zu dem Bauteil auf dessen Oberfläche ein Glattwalzeffekt erzielt wird. Der Glattwalzeffekt führt zu einer gleichmäßigen Verfestigung der Auflagefläche des Bauteiles unter dem Kopf des Befestigungselementes. Die Sicherungswirkung entsteht dadurch, daß die beim Anziehen des Befestigungselementes eintretenden elastisch-platischen Verformungen nach Abschluß des Anziehvorganges zu Aufwölbungen zwischen den Rippen führen, die ausreichenden Widerstand gegen selbsttätiges Lösen leisten.

Bei Verwendung des bekannten Befestigungselementes kann ausreichende Sicherungswirkung erhalten werden, wenn das Material des Bauteiles es ermöglicht, einen Glattwalzeffekt mit der oben beschriebenen Wirkung zu erzielen. Es werden aber zunehmend Bauteile aus einem Material verwendet, welches nicht ausreichend verfestigt werden kann, beispielsweise verschiedene Kunststoffe, unter anderem faserverstärkte Kunststoffe.

Es besteht daher ein Bedürfnis dafür eine Befestigungseinrichtung zu erhalten, die auch beim Befestigen von Bauteilen aus nicht ausreichend verfestigbarem Material eine Sicherungswirkung durch den genannten Glattwalzeffekt hervorbringt.

Eine Befestigungseinrichtung , mit der dies erreicht wird, weist eine Scheibe auf, die an ihrer dem ersten Bauteil zugewandten Fläche so ausgebildet ist, daß sie beim Anziehen der Befestigungseinrichtung an dem ersten Bauteil undrehbar gehalten ist, und die an ihrer gegenüberliegenden Fläche Rippen aufweist, die derart abgerundet sind, daß beim Anziehen der Schraube oder Mutter durch Relativdrehung zwischen der der Scheibe zugewandten Fläche der Schraube oder Mutter und der gegenüberliegenden Fläche der Scheibe ein Glattwalzeffekt an der Fläche der Schraube oder Mutter erzielt wird.

Aus der DE-A-28 11 108 ist eine Scheibe für eine Befestigungseinrichtung bekannt, die an ihrer dem zu befestigenden Bauteil zugewandten Fläche eine Ausbildung in Form einer Verzahnung aufweist, durch die bewirkt wird, daß die Scheibe beim Anziehen an dem zu befestigenden Bauteil undrehbar gehalten ist. Die bekannte Scheibe weist auf ihrer anderen Fläche, die der Auflagefläche der Schraube oder Mutter zugewandt ist, ebenfalls eine Verzahnung mit scharfen Kanten auf. Beim Anziehen der Schraube oder Mutter bei Verwendung einer solchen Scheibe ergibt sich zwischen der Verzahnung der Scheibe und der Auflagefläche der Schraube oder Mutter eine "Verhakung", durch die eine Verletzung der Auflagefläche der Schraube oder Mutter hervorgerufen wird. Dies ist unerwünscht, weil beispielsweise die Haltbarkeit der Schraube oder Mutter in unangemessener Weise herabgesetzt werden kann. Außerdem ergeben sich Späne, die zu Stellen gelangen können, an denen sie unerwünscht sind und an denen sie eine Gefahrenquelle darstellen können.

Weitere Merkmale der Erfindung sind in den Unteransprüchen angegeben.

Die Erfindung wird nachstehend anhand der Zeichnung beispielsweise erläutert.

Figur 1 ist eine schematische Darstellung einer Befestigungseinrichtung gemäß der Erfindung.

Figuren 2 bis 8 zeigen bevorzugte Ausführungsformen der Gestalt der Rippen an derjenigen Fläche der Scheibe gebildet sind, die der Auflagefläche des Schraubenkopfes oder der Mutter zugewandt ist.

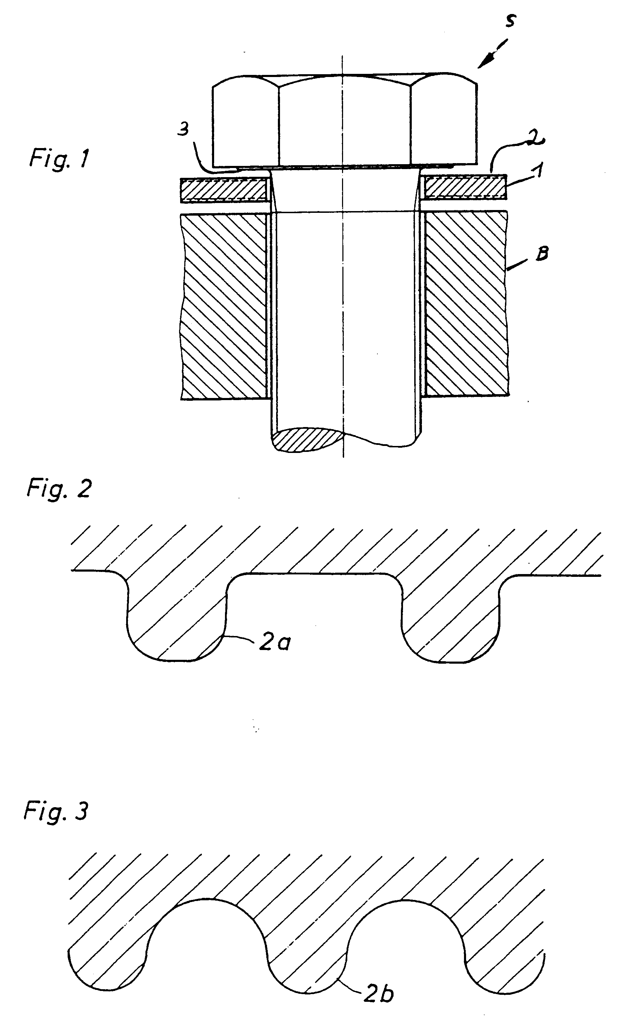

In Figur 1 ist eine Befestigungseinrichtung dargestellt, die eine Schraube S aufweist, mittels welcher ein erstes Bauteil B an einem anderen nicht dargestellten Bauteil befestigt werden soll. Es ist zu bemerken, daß anstelle eines einzelnen ersten Bauteiles B auch mehrere erste Bauteile vorhanden sein können, die aneinander und an einem anderen Bauteil befestigt werden sollen.

Die Befestigungseinrichtung weist weiterhin eine Scheibe 1 auf, die an ihrer dem Bauteil B zugewandten Fläche Ausbildungen besitzt, durch die gewährleistet ist, daß beim Anziehen die Scheibe 1 an der betreffenden Fläche des Bauteiles B undrehbar gehalten ist. Die Ausbildungen können von beliebiger an sich bekannter Art sein, solange die gerade beschriebene Wirkung erzielt ist, nämlich daß die Scheibe 1 beim Anziehen an dem Bauteil B undrehbar gehalten ist.

An ihrer der Auflagefläche 3 des Schraubenkopfes zugewandten Fläche weist die Scheibe 1 Rippen 2 auf, die derart abgerundet sind, daß bei relativer Drehung zwischen der Auflagefläche 3 des Schraubenkopfes und der Scheibe 1 auf der Oberfläche der Auflagefläche 3 des Schraubenkopfes ein Glattwalzeffekt erzielt wird.

Unter Glattwalzen ist ein in der Feinwerktechnik auch als Rollieren bezeichnetes Feinwalzverfahren zu verstehen, mit dem an metallischen Werkstücken ohne Zerspanung glatte und verfestigte Oberflächen erzeugt werden. Demgemäß ergibt sich bei Verwendung einer Befestigungseinrichtung gemäß der Erfindung beim Anziehen eine im wesentlichen gleichmäßige Verfestigung der gesamten Auflagefläche 3 des Schraubenkopfes.

Im Gegensatz dazu ergibt sich bei Verwendung bekannter selbstsichernder Befestigungseinrichtungen eine ungleichmäßige Verfestigung der betreffenden Auflagefläche, wobei an den Stellen, an denen nach dem Anziehen die Zähne (DE-A-28 11 108) zur Ruhe kommen, eine Verfestigung erhalten wird, die beträchtlich höher als die Verfestigung an den Stellen zwischen den Zähnen ist. Wird eine solche bekannte selbstsichernde Befstigungseinrichtung durch eine äußere Kraft über die Montage-Vorspannkraft hinaus belastet, so werden die Zähne noch tiefer eingedrückt, da die bis dahin noch wenig verfestigten Bereiche unter den Zahnlücken zum Tragen herangezogen werden. Die Verbindung "setzt" sich. Die erfindungsgemäße Befestigungseinrichtung hat demgegenüber den Vorteil, daß die gesamte Auflagefläche des Schraubenkopfes im wesentlichen gleichmäßig verfestigt ist, so daß demzufolge entsprechend höhere Belastungen erforderlich sind, um ein Setzen zu erzeugen. Die Gefahr des Setzens ist demgemäß entsprechend geringer. Unter Setzen wird hier die Erscheinung verstanden, daß sich nach Beendigung des Anziehvorganges ein Verlust an Vorspannung ergibt als Folge nachträglichen Fließens von Material des Schraubenkopfes.

Es ist zu verstehen, daß die oben beschriebenen Wirkungen in gleicher Weise auftreten, wenn anstelle der Schraube S gemäß Figur 1 eine Mutter verwendet wird, die auf ein Gewinde aufgeschraubt wird.

In den Figuren 2 bis 6 sind verschiedene Querschnittsgestalten der Rippen 2 wiedergegeben. Diese Rippen sind in teilabgewickelter Darstellung wiedergegeben.

Die Rippen 2a gemäß Figur 2 haben im wesentlichen Rechteckgestalt, wobei die freien Kanten jedoch so stark abgerundet sind, daß beim Anziehen einer Schraube oder Mutter die Rippen praktisch über das Material der Auflagefläche 3 mit Rollierwirkung gleiten, ohne in diese einzudringen, hierbei jedoch mit zunehmender Vorspannung eine zunehmende und gleichmäßig erfolgende Verfestigung des Materials des Schraubenkopfes hervorrufen. Dennoch wird bei Verwendung mit Rippen 2a gemäß der in Figur 2 wiedergegebenen Querschnittsgestalt ausreichende Sicherung gegen selbsttätiges Lösen erhalten.

Bei der Ausführungsform gemäß Figur 3 haben die Rippen 2b im wesentlichen halbkreisförmigen Umriß, und auch die Übergänge an der Scheibe 1 sind mit einem vergleichsweise großen Radius ausgeführt.

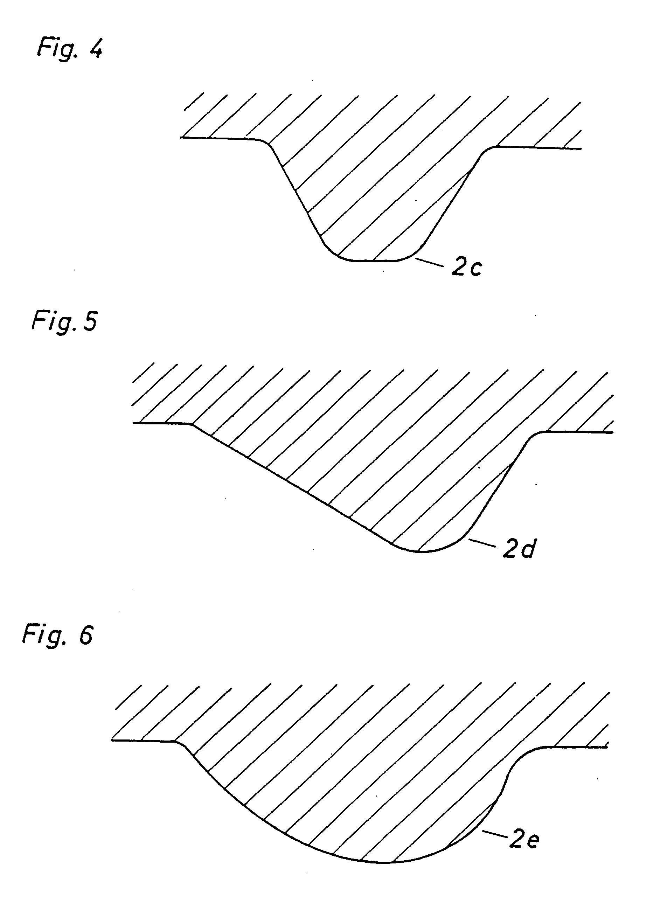

Bei der Ausführungsform gemäß Figur 4 haben die Rippen 2c einen im wesentlichen trapezförmigen Querschnitt, wobei die freien Kanten selbstverständlich wieder mit einem ausreichend groben Abrundungsradius versehen sind, so daß die oben geschilderte Wirkung eintritt.

Bei der Ausführungsform gemäß Figur 5 haben die Rippen 2d einen Querschnitt in Form eines stark gerundeten asymmetrischen Trapezes.

Bei der Ausführungsform gemäß Figur 6 haben die Rippen 2e einen Querschnitt, der durch einen stetigen asymmetrischen, an jedem Punkt seinen Anstieg ändernden Linienzug begrenzt ist.

Die in den Figuren 2 bis 6 dargestellten Rippen können von einer ebenen Fläche vorragen, sie können aber auch durch beliebig gekrümmte Linienzüge mit der Fläche und/oder miteinander verbunden sein.

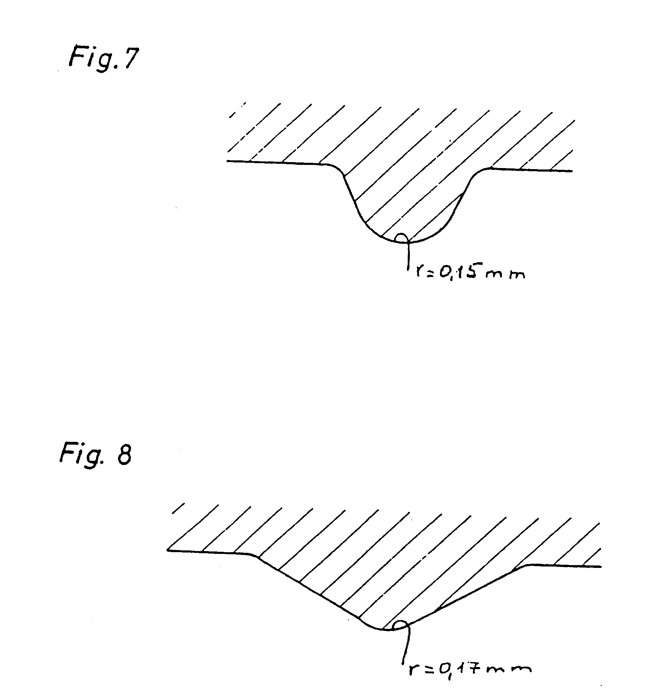

In den Figuren 7 und 8 sind Rippen 2f bzw. 2g dargestellt, die symmetrisches Profil und die Gestalt eines gleichschenkeligen Dreiecks mit erfindungsgemäß abgerundeter Spitze aufweisen.

Bei praktischen Versuchen ist gefunden worden, daß die gewünschte, der Wirkung von Rollierelementen ähnliche Wirkung beispielsweise bei Rippengestalten gemäß den Figuren 7 und 8 erhalten wurde, wenn ein Abrundungsradius an dem mit der Auflagefläche 3 der Schraube oder Mutter S in Eingriff tretende Teil der Rippen im Bereich von 0,15 bis 0,17 mm verwendet wurde. Dabei wurden unterschiedliche Flankenwinkel im Bereich von 50 bis 120° und eine Rippenhöhe von beispielsweise 0,17 mm angewendet.

Es ist festzustellen, daß der Abrundungsradius der Rippen nur insofern kritisch ist, daß gewährleistet ist, daß beim Drehen des Befestigungselementes relativ zu der Scheibe 1 die oben erwähnte Wirkung ähnlich der Wirkung eines Rollierelementes erhalten wird. Es kann somit von den oben angegebenen Werten für den Abrundungsradius abgewichen werden, solange die angestrebte Wirkung erhalten wird. Das gleiche gilt für die bezüglich des Flankenwinkels und der Rippenhöhe angegebenen Werte. Auch hier stellen die betreffenden angegebenen Werte lediglich bei praktischen Versuchen angewendete beispielsweise Werte dar.

Es ist weiter festzustellen, daß die jeweils verwendete Anzahl der Rippen von besonderen Anwendungen, besonderen Anforderungen und dgl. abhängt. Allgemein kann gesagt werden, daß die Anzahl der vorgesehenen Rippen in dem üblicherweise verwendeten Bereich liegt. Die Rippen können weiterhin in gleichmäßiger Verteilung und Anordnung vorhanden sein. Sie können jedoch in gewissen Fällen auch in ungleichmäßiger Verteilung und Anordnung vorhanden sein.

Es ist weiterhin zu verstehen, daß die Rippen 2 sich radial über einen Teil der dem Schraubenkopf zugewandten Fläche der Scheibe 1 oder über die gesamte Fläche erstrecken können. Weiterhin können die Rippen 2 gekrümmt ausgebildet sein und sich wiederum über einen Teil oder über die gesamte Fläche der Scheibe 1 erstrecken, die der Auflagefläche 3 des Schraubenkopfes zugewandt ist.

Hierbei ist es möglich, auf der dem Schraubenkopf zugewandten Fläche der Scheibe 1 ausschließlich sich in radialer Richtung erstreckende oder gekrümmte Rippen vorzusehen, die sich über die gesamte Fläche der Scheibe 1 erstrecken. Es ist ebenfalls möglich, auf dieser Fläche der Scheibe 1 sich radial erstreckende oder gekrümmte Rippen vorzusehen, die sich nur über einen Teil dieser Scheibenfläche erstrecken. Es ist schließlich auch möglich, auf der dem Schraubenkopf zugewandten Fläche der Scheibe 1 in regelmäßigen oder unregelmäßigen Mustern Rippen, die sich über die gesamte Fläche der Scheibe 1 erstrecken, und Rippen vorzusehen, die sich nur über einen Teil dieser Scheibenfläche erstrecken.

Es liegt auch im Rahmen der Erfindung, beispielsweise am Außenumfang der dem Schraubenkopf zugewandten Fläche der Scheibe 1 oder zwischen bestimmten Rippen oder Rippengruppen ebene Flächen vorzusehen, durch welche beispielsweise eine Abdichtwirkung erzielt werden kann, oder welche die Höhe der Aufwölbungen begrenzen. Letztere Begrenzungswirkung kann beispielsweise bei Schrauben oder Muttern aus relativ weichem Material vorteilhaft sein.

Bei einer weiteren bevorzugten Ausführungsform, die in der Zeichnung nicht dargestellt ist, weist die Scheibe auf beiden Flächen Rippen auf, die derart abgerundet sind, daß der erläuterte Glattwalzeffekt erzielt wird. Eine solche Scheibe ist einfacher herzustellen als eine Scheibe, die auf ihren beiden Flächen unterschiedliche Ausbildungen besitzt. Dennoch wird auch bei Verwendung einer solchen Scheibe gewährleistet, daß beim Anziehen der Befestigungseinrichtung die Scheibe an dem zu befestigenden Bauteil gegen Drehung gehalten ist. Gleichzeitig ergibt sich der Vorteil, daß bei Benutzung dieser Scheibe nicht darauf geachtet werden muß, daß die Scheibe sich in ihrer richtigen Lage befindet.

Für die Form der Scheibe können praktisch alle bekannten Formen und Gestaltungen verwendet werden.

## Patentansprüche

1. Selbstsichernde Befestigungseinrichtung, mit einer Schraube oder Mutter zum Befestigen wenigstens eines ersten Bauteiles an einem anderen Bauteil, wobei die Sicherungswirkung an miteinander in Eingriff tretenden Flächen mittels Rippen erhalten wird, die derart abgerundet sind, daß ein Glattwalzeffekt erzielt wird,
**dadurch gekennzeichnet,** daß die Befestigungseinrichtung eine Scheibe (1) aufweist, die an ihrer dem ersten Bauteil (B) zugewandten Fläche so ausgebildet ist, daß sie beim Anziehen der Befestigungseinrichtung an dem ersten Bauteil undrehbar gehalten ist, und die an ihrer gegenüberliegenden Fläche Rippen (2) aufweist, die derart abgerundet sind, daß beim Anziehen der Schraube oder Mutter durch Relativdrehung zwischen der der Scheibe (1) zugewandten Fläche der Schraube oder Mutter und der gegenüberliegenden Fläche der Scheibe ein Glattwalzeffekt an der Fläche der Schraube oder Mutter erzielt wird.

2. Befestigungseinrichtung nach Anspruch 1, dadurch gekennzeichnet, daß die der Scheibe (1) gegenüberliegende Fläche (3) der Schraube oder Mutter (S) glatt ausgebildet ist.

3. Befestigungseinrichtung nach Anspruch 1 oder 2, dadurch gekennzeichnet, daß die Scheibe (1) lose vorgesehen ist.

4. Befestigungseinrichtung nach Anspruch 1 oder 2, dadurch gekennzeichnet, daß die Scheibe (1) mit der Schraube oder Mutter frei drehbar aber unverlierbar verbunden ist.

5. Befestigungseinrichtung nach einem der Ansprüche 1 bis 4, dadurch gekennzeichnet, daß die Rippen (2) sich radial über einen Teil der der Schraube oder Mutter (S) zugewandten Fläche der Scheibe (1) oder über die gesamte Fläche erstrecken.

6. Befestigungseinrichtung nach einem der Ansprüche 1 bis 4, dadurch gekennzeichnet, daß die Rippen (2) gekrümmt ausgebildet sind und sich über einen Teil oder die gesamte der Schraube oder Mutter (S) zugewandte Fläche der Scheibe (1) erstrecken.

7. Befestigungseinrichtung nach einem der Ansprüche 1 bis 6, dadurch gekennzeichnet, daß die abgerundeten Rippen auf beiden Flächen der Scheibe (1) vorgesehen sind.

8. Befestigungseinrichtung nach einem der Ansprüche 1 bis 7, dadurch gekennzeichnet, daß am Außenumfang der der Schraube oder Mutter zugewandten Fläche der Scheibe (1) oder zwischen einzelnen Rippen oder Rippengruppen ebene Flächen gebildet sind, die eine Abdichtung bewirken bzw. die Höhe der beim Glattwalzeffekt entstehenden Wölbungen begrenzen.

## Claims

1. Self-locking fastening device with a bolt or nut for fixing at least a first component against another component, wherein the locking action is obtained by surfaces meeting in engagement with one another via ribs which are rounded off in such a fashion that a planishing effect is achieved, characterised in that the fastening device has a washer (1) which is so constructed on its surface turned towards the first component (B) that on screwing up the fastening device it is held non-rotatably against the first component and which has on its oppositely lying surface ribs (2) which are rounded off in such a fashion that on screwing up the bolt or nut by relative rotation between the surface of the bolt or nut turned towards the washer (1) and the oppositely lying surface of the washer a planishing effect is generated on the surface of the bolt or nut.

2. Fastening device according to Claim 1, characterised in that the surface (3) of the bolt or nut (S) lying opposite the washer (1) is constructed flat.

3. Fastening device according to Claim 1 or 2, characterised in that the washer (1) is provided loosely.

4. Fastening device according to Claim 1 or 2, characterised in that the washer (1) is connected with the bolt or nut freely rotatably but non-releasably.

5. Fastening device according to one of Claims 1 to 4, characterised in that the ribs (2) extend radially over a part or the whole of the surface of the washer (1) turned towards the bolt or nut (S).

6. Fastening device according to one of Claims 1 to 4, characterised in that the ribs (2) are constructed crookedly and extend over a part or the whole of the surface of the washer (1) turned towards the bolt or nut (S).

7. Fastening device according to one of Claims 1 to 6, characterised in that the rounded off ribs are provided on both surfaces of the washer (1).

8. Fastening device according to one of Claims 1 to 7, characterised in that on the exterior periphery of the surface of the washer (1) turned towards the bolt or nut or between individual ribs or groups of ribs flat surfaces are formed which effect a sealing or which limit the height of the undulations arising from the planishing effect.

## Revendications

1. Dispositif de fixation autobloquante, comportant une vis ou écrou pour fixer au moins une première pièce de construction sur une autre pièce de construction, l'effet autobloquant sur les surfaces en prise l'une avec l'autre étant obtenu au moyen de nervures, qui sont arrondies de manière telle que l'on obtient un effet de rouleau lisse,
caractérisé en ce que le dispositif de fixation comprend une rondelle (1), qui, sur sa surface orientée vers la première pièce de construction (B), est conçue de manière telle qu'elle est maintenue sans rotation possible sur la première pièce de construction lors du serrage du dispositif de fixation, et qui présente sur sa face opposée des nervures (2), qui sont arrondies de manière telle que lors du serrage de la vis ou écrou, par rotation relative entre la surface de la vis ou écrou orientée vers la rondelle (1) et la surface du disque, opposée, on obtient un effet de rouleau lisse sur la surface de la vis ou écrou.

2. Dispositif de fixation selon la revendication 1, caractérisé en ce que la surface (3) de la vis ou écrou (S) orientée vers la rondelle est conçue lisse.

3. Dispositif de fixation selon l'une quelconque des revendications 1 ou 2, caractérisé en ce que la rondelle (1) est prévue amovible.

4. Dispositif de fixation selon l'une quelconque des revendications 1 ou 2, caractérisé en ce que la rondelle (1) est reliée à la vis ou écrou de façon à être libre en rotation, mais imperdable.

5. Dispositif de fixation selon l'une quelconque des revendications 1 à 4, caractérisé en ce que les nervures (2) s'étendent dans le sens radial sur une partie de la surface de la rondelle (1) orientée vers la vis ou écrou (S) ou sur la totalité de la surface.

6. Dispositif de fixation selon l'une quelconque des revendications 1 à 4, caractérisé en ce que les nervues (2) sont conçues courbes et s'étendent sur une partie ou sur la totalité de la surface de la rondelle (1) orientée vers la vis ou écrou (S).

7. Dispositif de fixation selon l'une quelconque des revendications 1 à 6, caractérisé en ce que les nervures arrondies sont prévues sur les deux surfaces de la rondelle (1).

8. Dispositif de fixation selon l'une quelconque des revendications 1 à 7, caractérisé en ce que des surfaces planes sont conçues sur la périphérie de la surface de la rondelle (1) orientée vers la vis ou écrou ou entre les nervures unitaires ou groupes de nervures, ces surfaces planes ayant un effet d'étanchéification et/ou limitent la hauteur des courbures apparaissant lors de l'effet de rouleau lisse.
